# EUROPEAN PATENT APPLICATION

(11) **EP 4 675 765 A1**
(43) Date of publication of application: **07.01.2026**
(21) Application number: 24844175.0
(22) Date of filing: 16.01.2024
(51) Int. Cl.: H01M 10/655, H01M 10/654, H01M 10/653

(54) **BATTERY CELL, BATTERY AND ELECTRICAL APPARATUS**

(30) Priority: 25.07.2023 CN 202321970108 U
(71) Applicant: Contemporary Amperex Technology Co., Limited, Ningde, Fujian 352100 (CN)
(72) Inventor: ZHENG, Wei, Ningde, Fujian 352100 (CN); WU, Baozhen, Ningde, Fujian 352100 (CN); WANG, Yuwen, Ningde, Fujian 352100 (CN); YOU, Xingyan, Ningde, Fujian 352100 (CN); BAI, Wenlong, Ningde, Fujian 352100 (CN); LI, Qi, Ningde, Fujian 352100 (CN)
(74) Representative: Ran, Handong
(86) International application number: PCT/CN2024/072588
(87) International publication number: WO 2025/020475

(57) **Abstract**

The present application relates to a battery cell, a battery and an electrical apparatus. The battery cell comprises a casing, at least one electrode component and a thermal conduction structure; the casing is provided with a heat exchange casing wall, the heat exchange casing wall being used for transferring heat inside the battery cell to a heat exchange structure outside the casing; the thermal conduction structure and all of the electrode component are accommodated inside the casing, the thermal conduction structure being arranged between the electrode component and the heat exchange casing wall for heat transfer. In the technical solution of the present application, the casing is provided with the heat exchange casing wall in contact with the heat exchange structure outside, and the thermal conduction structure is provided between the electrode component and the heat exchange casing wall, so that the heat of the electrode component can be rapidly transferred to the heat exchange casing wall via the thermal conduction structure, and then is rapidly transferred to the heat exchange structure outside via the heat exchange casing wall so as to undergo a rapid heat exchange with the heat exchange structure, thereby improving the heat exchange efficiency of the battery cell and thus improving the reliability of a battery.

## Description

### CROSS-REFERENCE TO RELATED APPLICATIONS

The present application claims priority to Chinese Patent Application No. 202321970108.4, filed on July 25, 2023 and entitled "BATTERY CELL, BATTERY, AND POWER CONSUMING APPARATUS", which is incorporated herein by reference in its entirety.

### TECHNICAL FIELD

The present application relates to the field of battery technologies, and in particular, to a battery cell, a battery, and a power consuming apparatus.

### BACKGROUND

A battery cell is the smallest unit that implements charging/discharging in a battery. An electric vehicle has an increasingly significant requirement for fast charging of a battery cell. A large rate of overcurrent during fast charging of a battery cell means that its temperature rise is far higher than a temperature rise caused by charging heat of a conventional slow-charging battery cell. A high temperature easily causes the battery cell to explode, resulting in reduced reliability of a battery.

### SUMMARY

In view of the foregoing problem, the present application provides a battery cell, a battery, and a power consuming apparatus, so as to improve the heat dissipation effect of the battery cell, thereby improving the reliability of the battery.

According to a first aspect, the present application provides a battery cell, including a case, at least one electrode assembly, and a heat conduction structure. The case has a heat exchange case wall, and the heat exchange case wall is configured to conduct heat inside the battery cell to a heat exchange structure located outside the case. The heat conduction structure and all electrode assemblies are accommodated in the case, and the heat conduction structure is arranged between the electrode assembly and the heat exchange case wall in the manner of heat conduction.

In the technical solutions of the examples of the present application, the case has the heat exchange case wall in contact with the external heat exchange structure, and the heat conduction structure is arranged between the electrode assembly and the heat exchange case wall, so that the heat of the electrode assembly can be rapidly transferred to the heat exchange case wall through the heat conduction structure, and then is rapidly transferred to the external heat exchange structure from the heat exchange case wall, so as to rapidly perform heat exchange with the heat exchange structure. When the battery cell needs to dissipate heat to reduce the temperature, the heat dissipation efficiency is high, thereby being conducive to improving the reliability of a battery.

In some examples, an outer surface of at least one electrode assembly is arranged opposite to the heat exchange case wall, and a heat conduction structure is arranged between at least one group of outer surfaces and the heat exchange case wall that are arranged opposite to each other. In this case, the heat conduction structure is arranged between the at least one group of outer surfaces and the heat exchange case wall that are arranged opposite to each other, and the heat may be directly transferred to the heat exchange case wall by these outer surfaces, so that a heat transfer path is shortened, the heat transfer efficiency is faster, and the heat exchange efficiency of the battery cell is higher.

In some examples, at least one outer surface of the at least one electrode assembly in a height direction is a first heat dissipation surface, and a tab of the electrode assembly is located on at least one end in the height direction. The heat exchange case wall includes a first case wall. The first heat dissipation surface and the first case wall are arranged opposite to each other in the height direction, and a heat conduction structure is arranged between the first heat dissipation surface and the first case wall. Because the tab is arranged in the height direction of the electrode assembly, the outer surface used as the first heat dissipation surface may expose an electrode plate/spacer in the electrode assembly (the electrode plates are separated by the spacer). In this way, the heat conduction structure may be in contact with an inner electrode plate/spacer of the electrode assembly, so that the internal heat of the electrode assembly is easily exported, and the heat exchange efficiency of the electrode assembly is high.

In some examples, the electrode assembly includes a positive electrode plate and a negative electrode plate. Both the positive electrode plate and the negative electrode plate include a current collection matrix. In the electrode assembly having the first heat dissipation surface, the current collection matrix in at least one of the positive electrode plate and the negative electrode plate includes a convex part that protrudes from the first heat dissipation surface, and the heat conduction structure located between the first heat dissipation surface and the first case wall is in heat conduction connection with the convex part. The convex part is formed by the current collection matrix by means of protrusion, and the current collection matrix usually has a good heat conduction effect. In this way, the convex part has a good heat conduction effect, and the heat from the current collection matrix can be directly and rapidly conducted out through the convex part, thereby being conducive to improving the heat exchange efficiency of the electrode assembly.

In some examples, in the electrode assembly having the first heat dissipation surface, the tab and the first heat dissipation surface are arranged facing away from each other in the height direction of the electrode assembly. In this way, the convex part is arranged apart from the tab, and a conventional case structure can be used to a large extent, thereby reducing the improvement cost of the battery cell.

In some examples, the heat conduction structure includes a heat conduction and insulation layer, and the heat conduction and insulation layer is arranged on an inner side surface of the first case wall and is connected between the first case wall and the convex part. Due to the arrangement of the convex part, the size of the electrode assembly in the height direction is increased. Here, the heat conduction and insulation layer is connected between the convex part and the first case wall in the manner of heat conduction, thereby being conducive to reducing the height size of the battery cell, and improving the energy density of the battery cell.

In some examples, the thickness of the heat conduction and insulation layer is L1, and the protrusion height of the convex part is L2, satisfying: L1<3 mm, and/or, L2<6 mm. When L1 satisfies L1<3 mm, or L2 satisfies L2<6 mm, the energy density and processing cost of the battery cell are relatively moderate, and certain heat exchange efficiency may be achieved.

In some examples, the heat conduction and insulation layer includes at least one of a polyimide layer, an epoxy resin layer, a phenolic resin layer, a urea formaldehyde resin layer, a polyether ether ketone layer, a polybenzimidazole layer, an alumina layer, a boehmite layer, and a silicon carbide layer. In this case, the heat conduction and insulation layer has a good heat conduction effect and insulation effect.

In some examples, L1 satisfies: 0.02 mm≤L1≤0.6 mm, and/or, L2 satisfies: 1 mm≤L2≤4 mm. In this case, the energy density of the battery cell is high, and the battery cell has certain heat exchange efficiency.

In some examples, at least one outer surface of at least one electrode assembly in a thickness direction is a second heat dissipation surface, the heat exchange case wall includes a second case wall, the second heat dissipation surface and the second case wall are arranged opposite to each other in the thickness direction, and a heat conduction structure is arranged between the second heat dissipation surface and the second case wall. In this case, the second heat dissipation surface having a relatively large surface area in the electrode assembly is connected to the heat conduction structure, so that a contact area between the electrode assembly and the second heat dissipation surface is large, and the heat exchange efficiency is higher.

In some examples, a plurality of electrode assemblies are provided, the plurality of electrode assemblies are sequentially arranged along a thickness direction of the plurality of electrode assemblies, and every two adjacent electrode assemblies are spaced to form a through space. The heat conduction structure includes a first heat conduction and insulation pad, and the first heat conduction and insulation pad extends into each through space and is in surface connection with an outer surface forming each through space. In this case, the same first heat conduction and insulation pad may be in heat conduction connection with the thickness-direction outer surfaces of two electrode assemblies. The heat conduction structure has higher heat conduction efficiency for all electrode assemblies as a whole.

In some examples, the first heat conduction and insulation pad is continuously arranged in an extended manner, the through spaces sequentially arranged along the thickness direction of the electrode assembly are sequentially located on an extension path of the first heat conduction and insulation pad, and the first heat conduction and insulation pad is arranged between the second heat dissipation surface and the second case wall. In this case, the first heat conduction and insulation pad may be in heat conduction contact with the outer surfaces of the plurality of electrode assemblies in the thickness direction on the extension path, thereby improving the heat exchange efficiency between the second case wall and the electrode assembly.

In some examples, the thickness of the first heat conduction and insulation pad is L3, satisfying: L3<4 mm. When L3<4 mm, the battery cell can achieve both the high energy density of the battery cell and the high heat conduction efficiency of the first heat conduction and insulation pad.

In some examples, L3 satisfies: 0.3 mm≤L3≤2 mm. In this case, the energy density and heat conduction efficiency of the battery cell are both high.

In some examples, one of the outer surfaces of each electrode assembly in a width direction is a third heat dissipation surface, and the third heat dissipation surfaces of adjacent electrode assemblies are arranged facing away from each other in the width direction. The third heat dissipation surface is in surface contact with the first heat conduction and insulation pad. In this case, not only a contact area between the first heat conduction and insulation pad and the electrode assembly is increased, but also the first heat conduction and insulation pad and the electrode assembly are more tightly wound. The position stability of each electrode assembly can be enhanced by the first heat conduction and insulation pad.

In some examples, at least one outer surface of at least one electrode assembly in a width direction is a third heat dissipation surface, the case includes a third case wall, the third heat dissipation surface is arranged opposite to the third case wall, and a heat conduction structure is arranged between the third heat dissipation surface and the third case wall. In this case, by arranging the heat conduction structure between the third case wall and the third heat dissipation surface, a transfer path through which the heat of the electrode assembly is transferred to the case can be increased, so that the degree of heat exchange between the case and the outside can be improved, thereby facilitating the heat dissipation of the battery cell.

In some examples, a plurality of electrode assemblies are provided, the plurality of electrode assemblies are arranged along the thickness direction of the plurality of electrode assemblies, and every two adjacent electrode assemblies are spaced to form a through space. The heat conduction structure includes a second heat conduction and insulation pad, a part of the second heat conduction and insulation pad extends into each through space and is in surface connection with an outer surface forming each through space, and a remaining part of the second heat conduction and insulation pad is arranged between all third heat dissipation surfaces and the third case. In this case, the second heat conduction and insulation pad may extend into the through space between the electrode assemblies and is in heat conduction connection with an adjacent electrode assembly, so as to improve the heat conduction efficiency between the electrode assembly and the case, thereby being conducive to improving the heat dissipation efficiency when the internal heat of the battery cell is conducted to the outside.

According to a second aspect, the present application provides a battery, including a heat exchange structure and the foregoing battery cell. The heat exchange structure is located outside a case and is in contact with a heat exchange case wall.

In some examples, the battery includes a box body, a plurality of battery cells are provided, and all battery cells are supported in parallel on a bottom inner wall of the box body. A heat exchange structure is arranged between adjacent battery cells, and/or a heat exchange structure is arranged between the bottom inner wall and the battery cell. In this case, corresponding to different arrangement solutions of heat exchange structures, heat dissipation solutions of battery cells matched with the arrangement solutions may be configured. A heat exchange path between the heat exchange structure and the electrode assembly is shortened through the heat exchange case wall and the heat conduction structure, thereby improving the heat exchange efficiency of the heat exchange structure to the electrode assembly.

According to a third aspect, the present application provides a power consuming apparatus, including the battery in the foregoing example. The battery is configured to provide electric energy.

The above description only refers to an overview of the technical solutions of the present application. In order to understand the technical means of the present application more clearly, it can be implemented according to the content of the specification. In order to make the foregoing and other objectives, features and advantages of the present application more apparent, the specific embodiments of the present application are listed below.

### BRIEF DESCRIPTION OF THE DRAWINGS

In order to illustrate the technical solutions of the examples of the present application more clearly, the accompanying drawings required in the examples of the present application are briefly introduced below. Obviously, the accompanying drawings described below are only some examples of the present application. For those of ordinary skill in the art, other accompanying drawings can also be obtained according to these accompanying drawings without any creative effort. In the accompanying drawings:
FIG. 1 is a schematic structural view of a vehicle according to one or more examples;
FIG. 2 is a schematic structural view of a battery according to one or more examples;
FIG. 3 is a schematic exploded view of a battery shown in FIG. 2;
FIG. 4 is an enlarged view of a part A in FIG. 2;
FIG. 5 is a schematic exploded view of a battery according to another one or more examples;
FIG. 6 is a schematic view of a shape of a battery cell according to one or more examples;
FIG. 7 is a schematic view of an interlayer structure of an electrode assembly according to one or more examples;
FIG. 8 is a schematic view of internal structures of a battery cell in an example shown in FIG. 2;
FIG. 9 is an exploded view of the battery cell in the example shown in FIG. 8;
FIG. 10 is a cross-sectional view of a battery cell in an example shown in FIG. 2;
FIG. 11 is a schematic view of internal partial structures of a battery cell in an example shown in FIG. 5; and
FIG. 12 is a cross-sectional view of the battery cell shown in FIG. 11.

Reference numerals in specific embodiments are as follows:
1000, vehicle; 100, battery; 200, controller; 300, Motor; 10, box body; 10a, bottom inner wall; 20, battery cell; 21, case; 21a, heat exchange case wall; a1, first case wall; a2, second case wall; a3, third case wall; 22, electrode assembly; 22b, outer surface; b1, first heat dissipation surface; b2, second heat dissipation surface; k, through space; b3, third heat dissipation surface; 22c, positive electrode plate; 22d, negative electrode plate; J, current collection matrix; J1, tab; J11, positive electrode tab; J12, negative electrode tab; J2, convex part; X, thickness direction; Y, width direction; Z, height direction; 22e, spacer; 22f, electrode terminal; 23, heat conduction structure; 23a, first heat conduction and insulation pad; 23b, heat conduction and insulation layer; 23c, second heat conduction and insulation pad; c1, first heat conduction and insulation part; c2, second heat conduction and insulation part; and 30, heat exchange structure.

### DETAILED DESCRIPTION

The examples of the technical solutions of the present application will be described in detail below with reference to the accompanying drawings. The following examples are only used to illustrate the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. The terms used in the specification are merely intended to describe objectives of specific examples, but are not intended to limit the present application. The terms "including" and "having" and any variants thereof in the specification and claims of the present application and in the description of the accompanying drawings are intended to cover non-exclusive inclusion.

In the description of the examples of the present application, the technical terms "first", "second", and the like are only used to distinguish different objects, and should not be understood as indicating or implying relative importance or implicitly specifying the number, specific order or primary and secondary relationship of indicated technical features. In the description of the examples of the present application, "a plurality of" means two or more, unless otherwise expressly and specifically defined.

The "example" mentioned in the specification means that specific features, structures, or characteristics described with reference to the example may be included in at least one example of the present application. The appearance of this phrase in various places in the specification does not necessarily refer to the same example, nor is it a separate or alternative example that is mutually exclusive with other examples. A person skilled in the art explicitly or implicitly understands that the examples described in the specification may be combined with other examples.

In the description of the examples of the present application, the term "and/or" is merely an association relationship for describing associated objects, indicating that there may be three relationships. For example, A and/or B may represent three cases: only A exists, both A and B exist, and only B exists. In addition, the character "/" in this specification generally indicates an "or" relationship between the associated objects.

In the description of the examples of the present application, the term "a plurality of" means two or more (including two). Similarly, "a plurality of groups" means two or more groups (including two groups), and "a plurality of pieces" means two or more pieces (including two pieces).

In the description of the examples of the present application, the orientation or position relationships indicated by technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on orientation or position relationships shown in the accompanying drawings, and are intended to facilitate the description of the examples of the present application and simplify the description only, rather than indicate or imply that the apparatus or element referred to must have a particular orientation or be constructed and operated in a particular orientation, and therefore are not to be interpreted as limitations on the examples of the present application.

In the description of the examples of the present application, unless otherwise explicitly specified or defined, the technical terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, an internal communication between two elements, or an interaction relationship between two elements. For those of ordinary skill in the art, the specific meanings of the foregoing terms in the examples of the present application can be understood according to specific situations.

Nowadays, from the perspective of development of the market situation, power batteries are applied increasingly. Power batteries are not only used in energy storage power systems such as water power plants, fire power plants, wind power plants and solar power plants, but also in electric transportations such as electric bicycles, electric motorcycles and electric vehicles. With the continuous expansion of the application field of power batteries, the market demand is also constantly expanding.

A battery cell (also referred to as a battery cell) is the smallest unit that implements charging/discharging in a battery. An electric vehicle has an increasingly significant requirement for fast charging of a battery cell. A large rate of overcurrent during fast charging of a battery cell means that its temperature rise is far higher than a temperature rise caused by charging heat of a conventional slow-charging battery cell. A high temperature easily causes the battery cell to explode, resulting in reduced reliability of a battery.

The battery cell generally includes a case and an electrode assembly accommodated in the case. The electrode assembly is a main place in which the battery cell performs an electrochemical reaction, and is a main structure of heat generated in the battery cell. In order to reduce the temperature to cool the battery cell, it is common to arrange a heat exchange structure inside a box body of a battery for heat dissipation of the battery cell. The heat exchange structure may be in contact with the case of the battery cell for heat dissipation of the battery cell. In a structure of a common battery cell, a gap often exists between the electrode assembly and the case. Consequently, the efficiency of transferring heat between the electrode assembly and the heat exchange structure is not high, thereby affecting the heat dissipation efficiency of the battery cell.

Based on this, to improve the heat dissipation efficiency of the battery cell and improve the reliability of the battery, an example of the present application designs a battery cell. The main concept thereof is: a heat conduction structure for conducting heat is arranged between the case of the battery cell and the electrode assembly, and the heat conduction structure is in contact with a heat exchange case wall that is in the case and that directly/indirectly exchanges heat with the heat exchange structure, so that the heat of the electrode assembly may be subjected to heat exchange through the heat conduction structure, the heat exchange case wall, and the heat exchange structure. The efficiency of transferring the heat between the electrode assembly and the heat exchange structure is high, and the heat dissipation efficiency of the battery cell is good, thereby being conducive to improving the reliability of the battery.

The battery disclosed in this example of the present application includes the heat exchange structure and the battery cell mentioned in this example of the present application. The battery disclosed in this example of the present application may be used in, but is not limited to, a power consuming apparatus such as a vehicle, a ship, or an aircraft. A power system of the power consuming apparatus may be formed by using the battery disclosed in the present application.

An example of the present application provides a power consuming apparatus in which a battery is used as a power source. The power consuming apparatus may be, but is not limited to, a mobile phone, a tablet, a laptop, an electric toy, an electric tool, an electric bike, an electric vehicle, a ship, and a spacecraft. For convenience of description, the following examples are illustrated by taking an example in which a power consuming apparatus according to an example of the present application is a vehicle.

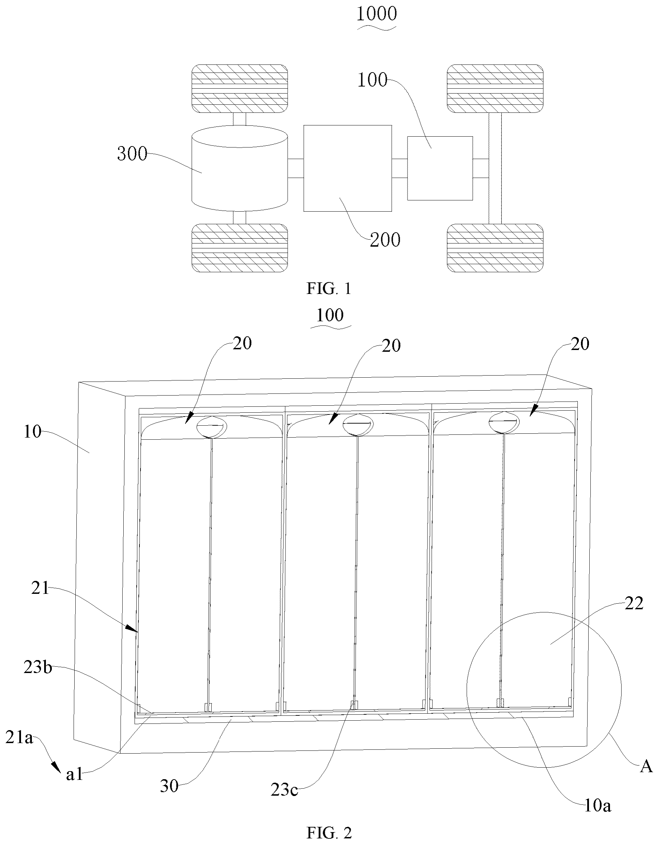

Referring to FIG. 1, FIG. 1 is a schematic structural view of a vehicle 1000 according to one or more examples. The vehicle 1000 may be a fuel vehicle, a gas vehicle, or a new energy vehicle. The new energy vehicle may be an all-electric vehicle, a hybrid electric vehicle, an extended range electric vehicle, or the like. A battery 100 is arranged inside the vehicle 1000, and the battery 100 may be arranged at the bottom, head or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

Referring to FIG. 2, FIG. 2 is a schematic structural view of a battery 100 according to one or more examples. The battery 100 includes a box body 10 and battery cells 20, and the battery cells 20 are accommodated in the box body 10. The box body 10 is configured to provide an accommodating space for the battery cells 20, and the box body 10 may be of a variety of structures. In some examples, the box body 10 may include a first part and a second part, the first part and the second part cover each other, and the first part and the second part jointly define the accommodating space for accommodating the battery cells 20. The first part may be of a hollow structure with an opening at one end. The second part may be a plate-shaped structure. The second part covers the opening side of the first part, so that the first part and the second part jointly define the accommodating space. Certainly, the box body 10 formed by the first part and the second part may be in various shapes, such as a cylinder and a cuboid.

In the battery 100, a plurality of battery cells 20 may be provided, and the plurality of battery cells 20 may be connected in series, parallel or series and parallel. The series and parallel connection refers to both series connection and parallel connection among the plurality of battery cells 20. The plurality of battery cells 20 may be directly connected in series, parallel or series and parallel together, and then, the whole formed by the plurality of battery cells 20 is accommodated in the box body 10. Certainly, the battery 100 may also be in the form of a module of the battery 100 composed of a plurality of battery cells 20 in series, parallel or series and parallel first, and then, a plurality of modules of the battery 100 are connected in series, parallel or series and parallel to form a whole which is accommodated in the box body 10. Each battery cell 20 may be a secondary battery 100 or a primary battery 100, or may be a lithium-sulfur battery 100, a sodium-ion battery 100 or a magnesium-ion battery 100, but is not limited thereto. The battery cell 20 may be in a cylindrical shape, a flat shape, a cuboid shape, or other shapes.

The battery cell provided in the examples of the present application is introduced in detail below with reference to the accompanying drawings.

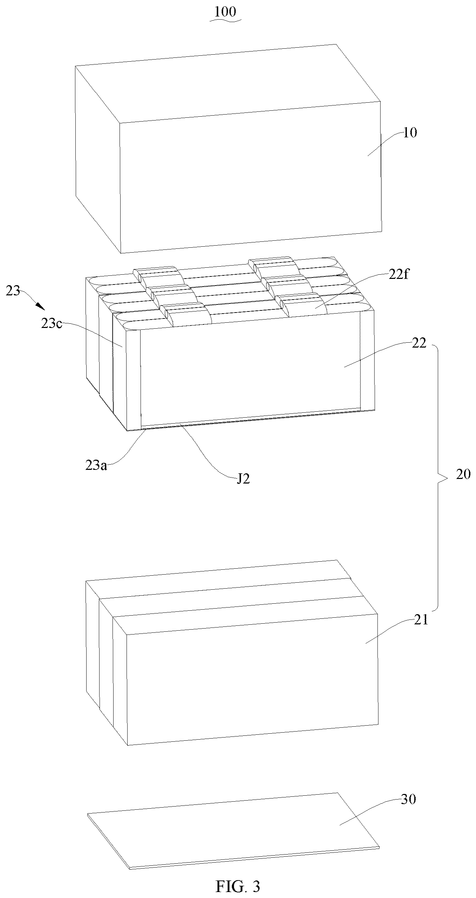

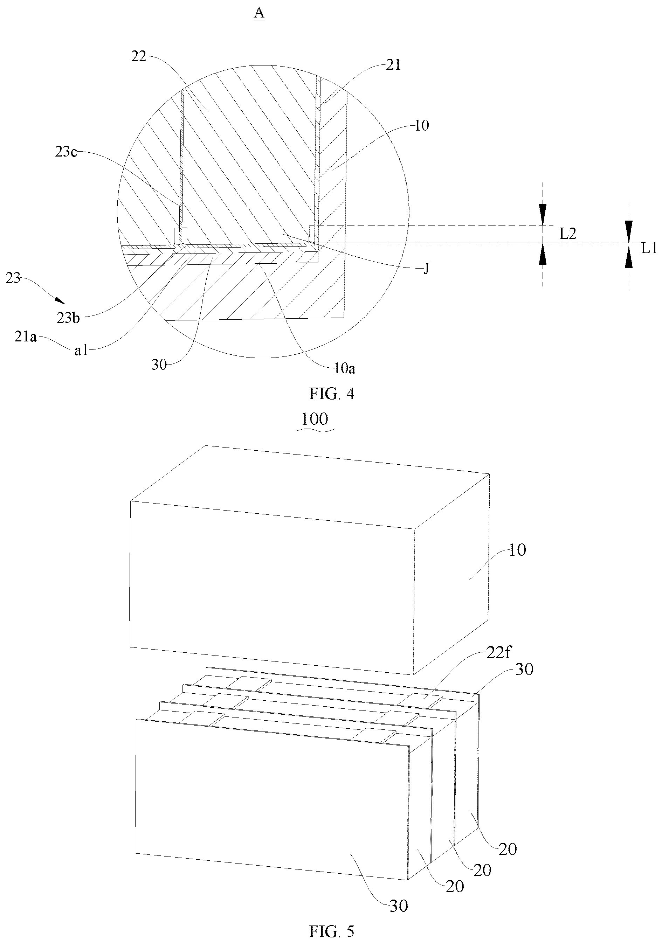

FIG. 3 is a schematic exploded view of a battery shown in FIG. 2. FIG. 4 is an enlarged view of a part A in FIG. 2.

According to one or more examples of the present application, referring to FIG. 2, FIG. 3, and FIG. 4, a battery cell 20 provided in an example of the present application includes a case 21, at least one electrode assembly 22, and a heat conduction structure 23. The case 21 has a heat exchange case wall 21a, and the heat exchange case wall 21a is configured to conduct heat inside the battery cell 20 to a heat exchange structure 30 located outside the case 21. The heat conduction structure 23 and all electrode assemblies 22 are accommodated in the case 21, and the heat conduction structure 23 is arranged between the electrode assembly 22 and the heat exchange case wall 21a in the manner of heat conduction.

The case 21 is a member for forming an internal environment of the battery cell 20. The internal environment may be configured to accommodate the electrode assembly 22, the heat conduction structure 23, an electrolyte solution, and the like.

Usually, the case 21 includes a case body (not shown) and an end cover (not shown). The case body encloses an accommodating cavity of the internal environment of the battery cell 20. One side or two sides of the accommodating cavity are open, and the end cover covers an open area of the accommodating cavity. The case body and the end cover may be connected by clamping, welding and the like, and may be integrally arranged or separately arranged. Usually, the case body and the end cover are assembled and connected in a height direction Z of the battery cell 20. In a conventional application scenario, the height direction Z of the battery cell 20 is approximately the same as the direction of gravity.

FIG. 5 is a schematic exploded view of a battery according to another one or more examples. Referring to FIG. 5, an electrode terminal 22f is usually arranged on the end cover, and the electrode terminal 22f is configured to connect the electrode assembly 22 to an external circuit. The case 21 may be made of materials such as plastic, ceramics and metals. To improve the heat conduction efficiency of the battery cell 20, the case 21 is mostly made of materials having relatively high heat conductivity, such as aluminum alloy and copper alloy.

Certainly, the battery cell 20 may further include other conventional components, such as a pressure release valve and an adapter. Usually, the pressure release valve is arranged on the end cover, and is configured to be communicated with the inside and outside of the battery cell 20 when the internal pressure/temperature of the battery cell 20 exceeds a threshold. The adapter may be configured to electrically connect the electrode assembly 22 and the electrode terminal 22f. In some examples, a plastic part may also be arranged on the end cover. The plastic part may be configured to isolate electrical connection components in the case body from the end cover, thereby reducing the risk of short circuit.

The heat exchange structure 30 may be a member configured to circulate a heat exchange medium, such as a heat exchange plate or a heat exchange tube. The heat exchange medium may be a gas medium such as Freon, a liquid medium such as water, or a freezing liquid. Optionally, the heat exchange structure 30 has a plate shape. The plate-shaped heat exchange structure 30 may be in contact with the heat exchange case wall 21a with a relatively large area, resulting in a good heat exchange effect. It should be noted that a heat exchange medium having a temperature lower than that of the heat exchange case wall 21a may circulate in the heat exchange structure 30, so as to reduce the temperature to cool the heat exchange case wall 21a. In some cases, a heat exchange medium having a temperature higher than that of the heat exchange case wall 21a may also circulate in the heat exchange structure 30, so as to increase the temperature to heat the heat exchange case wall 21a, so that the battery cell 20 in this example of the present application may have good heat exchange with the heat exchange structure 30 both under a cooling operation condition and a heating operation condition.

The case 21 has the heat exchange case wall 21a. During application, the heat exchange case wall 21a is configured to perform heat exchange with the heat exchange structure 30. Specifically, the heat exchange case wall 21a may be arranged opposite to the heat exchange structure 30, and the heat exchange case wall and the heat exchange structure may be directly connected to each other or have a certain gap. Usually, the heat exchange case wall 21a is in direct contact with the heat exchange structure 30, resulting in higher heat exchange efficiency. The heat exchange case wall 21a is a structure forming at least a part of the case 21. The heat exchange case wall 21a participates in encirclement to form the internal environment of the battery cell 20. Taking a cylindrical battery cell 20 as an example, the heat exchange case wall 21a may include a circumferential side wall part of a cylindrical case 21, and may further include a bottom wall part of the cylindrical case 21. Taking a square battery cell 20 as an example, the heat exchange case wall 21a may include parts such as front and rear side walls, left and right side walls, and a bottom wall of a square case 21. It can be understood that the heat exchange case wall 21a has a certain thickness, and the thickness is generally relatively thin.

The electrode assembly 22 is a component in the battery cell 20 that undergoes electrochemical reactions. The case 21 may include one or more electrode assemblies 22. The electrode assembly 22 is mainly formed by winding or stacking a positive electrode plate 22c and a negative electrode plate 22d, and a spacer 22e is usually arranged between the positive electrode plate 22c and the negative electrode plate 22d. Parts of the positive electrode plate 22c and the negative electrode plate 22d with active substances constitute a main body part of the electrode assembly 22, and parts of the positive electrode plate 22c and the negative electrode plate 22d without active substances separately constitute a tab J1. The positive electrode tab J1 and the negative electrode tab J1 may be located at one end of the main body part together or at two ends of the main body part respectively. During charging and discharging of the battery 100, a positive electrode active substance and a negative electrode active substance react with an electrolyte solution, and the tabs J1 are connected to the electrode terminals 22f to form a current loop.

The heat conduction structure 23 is a member having a heat conduction function, and may be a metal piece, a carbon fiber piece, or the like in various specific construction forms. Usually, to reduce leakage of a large current of the electrode assembly 22 to the case 21, the heat conduction structure 23 may have a certain insulation property. For example, the heat conduction structure 23 is a member composed of a metal body and an insulation coating on a surface of the metal body, or the heat conduction structure 23 is a member formed after a heat conduction insulation adhesive is solidified, or the heat conduction structure 23 is a ceramic structure.

The heat conduction structure 23 is connected between the electrode assembly 22 and the heat exchange case wall 21a in the manner of heat conduction. Usually, but without limitation, the heat conduction structure 23 is in direct contact with both the heat exchange case wall 21a and the electrode assembly 22, and a larger contact area indicates better heat conduction efficiency. It can be understood that the electrode assembly 22 is electrically charged when performing an electrochemical reaction, and the heat conduction structure 23 also has an insulation effect in addition to a heat conduction effect, so as to reduce the probability of current leakage of the case 21.

One or more electrode assemblies 22 may be included in the battery cell 20. A larger number of the electrode assemblies 22 indicates a larger capacity and a larger volume of the battery cell 20. The heat conduction structure 23 may be in heat conduction connection between the heat exchange case wall 21a and one or more electrode assemblies 22.

In the foregoing battery cell 20, the case 21 has the heat exchange case wall 21a in contact with the external heat exchange structure 30, and the heat conduction structure 23 is arranged between the electrode assembly 22 and the heat exchange case wall 21a, so that the heat of the electrode assembly 22 can be rapidly transferred to the heat exchange case wall 21a through the heat conduction structure 23, and then is rapidly transferred to the external heat exchange structure 30 from the heat exchange case wall 21a, so as to rapidly perform heat exchange with the heat exchange structure 30. When the battery cell 20 needs to dissipate heat to reduce the temperature, the heat dissipation efficiency is high, thereby being conducive to improving the reliability of the battery 100.

In some examples, an outer surface 22b of at least one electrode assembly 22 is arranged opposite to the heat exchange case wall 21a, and a heat conduction structure 23 is arranged between at least one group of outer surfaces 22b and the heat exchange case wall 21a that are arranged opposite to each other.

The outer surface 22b of the electrode assembly 22 is a surface on the outside of the electrode assembly 22. When the electrode assembly 22 has a cylindrical wound structure, the outer surface 22b of the electrode assembly 22 includes a circumferential side surface and an axial end surface of the cylindrical wound structure. When the electrode assembly 22 has a square wound structure or a square stacked structure, the outer surface 22b of the electrode assembly 22 includes front and rear side surfaces, left and right side surfaces, and upper and lower side surfaces.

Each electrode assembly 22 usually includes a plurality of outer surfaces 22b. In all electrode assemblies 22, an outer surface 22b of at least one electrode assembly 22 is arranged opposite to the heat exchange case wall 21a. The outer surface 22b and the heat exchange case wall 21a being "arranged opposite to each other" means that the outer surface 22b is arranged opposite to the heat exchange case wall 21a, and there is no other outer surface 22b between the outer surface and the heat exchange case wall. When there are two or more outer surfaces 22b arranged opposite to a same heat exchange case wall 21a, the heat conduction structure 23 may be arranged between one or more outer surfaces 22b and the heat exchange case wall 21a. That is, when the outer surface 22b and the heat exchange case wall 21a are arranged opposite to each other, the heat conduction structure 23 may not be arranged between the outer surface and the heat exchange case wall.

When a plurality of electrode assemblies 22 exist in the case 21, the plurality of electrode assemblies 22 are stacked in a group, and the heat exchange case wall 21a is located on a side of the electrode assembly 22 in a stacking direction, the outer surface 22b on a side of the group of electrode assemblies 22 in the stacking direction is arranged opposite to the heat exchange case wall 21a. When a plurality of electrode assemblies 22 exist in the case 21, and the heat exchange case wall 21a is located on a side of the electrode assembly 22 in the height direction Z, a bottom surface of each electrode assembly 22 in the height direction Z is arranged opposite to the heat exchange case wall 21a.

The heat conduction structure 23 may be entirely/partially located between the outer surface 22b and the heat exchange case wall 21a that are arranged opposite to each other.

In this case, the heat conduction structure 23 is arranged between the at least one group of outer surfaces 22b and the heat exchange case wall 21a that are arranged opposite to each other, and the heat may be directly transferred to the heat exchange case wall 21a by these outer surfaces 22b, so that a heat transfer path is shortened, the heat transfer efficiency is faster, and the heat exchange efficiency of the battery cell 20 is higher.

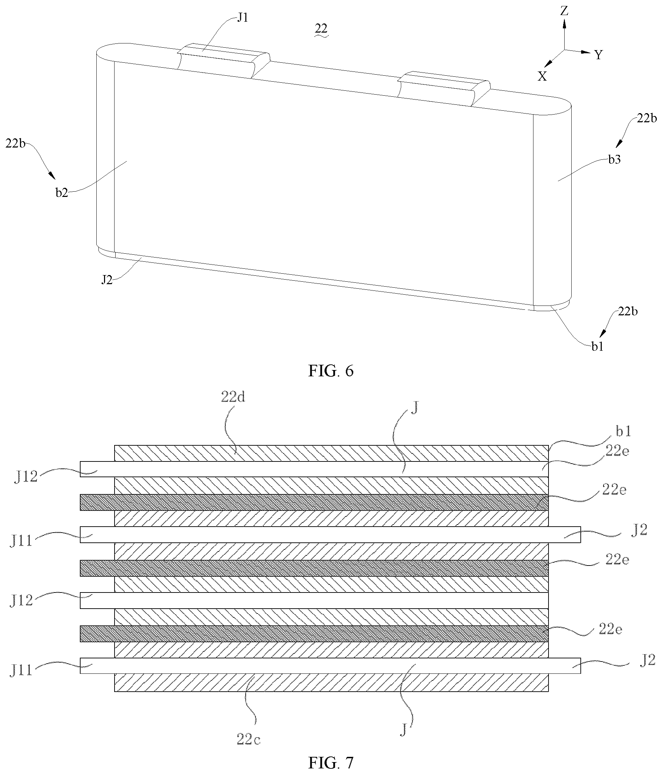

FIG. 6 is a schematic view of a shape of a battery cell 20 according to one or more examples.

In some examples, with reference to FIG. 4 and FIG. 6, at least one outer surface 22b of at least one electrode assembly 22 in the height direction Z is a first heat dissipation surface b1, and a tab J1 of the electrode assembly 22 is located on at least one end in the height direction Z. The heat exchange case wall 21a includes a first case wall a1. The first heat dissipation surface b1 and the first case wall a1 are arranged opposite to each other in the height direction Z, and a heat conduction structure 23 is arranged between the first heat dissipation surface and the first case wall.

In this example of the present application, the height direction Z of the electrode assembly 22 is a direction in which the tab J1 is located. Usually, without limitation, the height direction Z of the electrode assembly 22 corresponds to the height direction Z of the case 21. During conventional application, the height direction Z of the electrode assembly 22 corresponds to the direction of gravity. Certainly, the height direction Z of the electrode assembly 22 may also correspond to a width direction Y, a thickness direction X, and the like of the case 21. The height direction Z is not intended to limit the application of the electrode assembly 22 and the battery cell 20.

The first heat dissipation surface b1 is an outer surface 22b that can be directly in heat conduction connection with the first case wall a1 arranged opposite to each other through the heat conduction structure 23 and that is located in the height direction Z of the electrode assembly 22. The first case wall a1 is a case wall part of the case 21 located in the height direction Z of the electrode assembly 22.

Usually, each electrode assembly 22 has two outer surfaces 22b in the height direction Z of the electrode assembly. At least one of the two outer surfaces 22b is used as the first heat dissipation surface b1, including the following cases: upper and lower surfaces of one electrode assembly 22 are both used as the first heat dissipation surface b1; one or two of upper and lower surfaces of some of the electrode assemblies 22 are used as the first heat dissipation surface b1, and upper and lower surfaces of other electrode assemblies 22 are not used as the first heat dissipation surface b1; and bottom surfaces of all electrode assemblies 22 are all used as the first heat dissipation surface b1.

Usually, the first heat dissipation surface b1 is a bottom surface of the electrode assembly 22. Certainly, the first heat dissipation surface may also be a top surface of the electrode assembly 22. A case wall arranged opposite to the first heat dissipation surface b1 is a heat exchange case wall 21a, and the heat exchange case wall 21a is referred to as a first case wall a1. It can be understood that there may be one or two first case walls a1, provided that the first case wall is arranged opposite to the first heat dissipation surface b1 in the height direction Z.

Taking an example in which the electrode assembly 22 has a cylindrical structure, the height direction Z of the cylindrical structure usually corresponds to the axial direction of the cylindrical structure. Therefore, the first heat dissipation surface b1 usually is an axial end surface of the cylindrical structure, and the tab J1 is usually arranged at one end or two ends of the cylindrical structure in the axial direction. Taking a core winding type electrode assembly 22 as an example, when the direction of the tab J1 of the core winding type electrode assembly is the height direction Z of the core winding type electrode assembly, the tab J1 may be arranged at one end or two ends in the height direction Z, and one or two outer surfaces 22b in the height direction Z are used as the first heat dissipation surface b1.

It can be understood that for the same first case wall a1, when there are a plurality of first heat dissipation surfaces b1 arranged opposite to the first case wall, heat conduction structures 23 are arranged between all first heat dissipation surfaces b1 and the first case wall a1. In this case, the heat conduction structures 23 may be integrally arranged or may be separately arranged.

Usually, the tab J1 is formed by a current collection matrix J of an electrode plate in the electrode assembly 22. The positive electrode tab J1 is formed by the current collection matrix J of the positive electrode plate 22c, and the negative electrode tab J1 is formed by the current collection matrix J of the negative electrode plate 22d. The current collection matrix J refers to a sheet structure that can be configured to carry an active substance and conduct a current. The current collection matrix J may be a copper matrix, an aluminum matrix, a stainless steel matrix, or another composite matrix, and has an electrical conduction capability.

Because the tab J1 is arranged in the height direction Z of the electrode assembly 22, the outer surface 22b used as the first heat dissipation surface b1 may expose an electrode plate/spacer 22e in the electrode assembly 22 (the electrode plates are separated by the spacer 22e). In this way, the heat conduction structure 23 may be in contact with an inner electrode plate/spacer 22e of the electrode assembly 22, so that the internal heat of the electrode assembly 22 is easily exported, and the heat exchange efficiency of the electrode assembly 22 is high.

When the heat conduction structure 23 is connected to the first heat dissipation surface b1, the heat conduction structure may be connected to the positive electrode plate 22c and/or the negative electrode plate 22d. To reduce the risk of causing a short circuit between the positive electrode plate 22c and the negative electrode plate 22d, the heat conduction structure 23 usually has an insulation property. When the heat conduction structure 23 is in heat conduction connection with the positive electrode plate 22c/the negative electrode plate 22d, the heat conduction structure is usually in heat conduction connection with the current collection matrix J of the positive electrode plate 22c/the negative electrode plate 22d. Certainly, the heat conduction structure 23 may also be in heat conduction connection with the spacer 22e exposed on the first heat dissipation surface b1.

FIG. 7 is a schematic view of an interlayer structure of an electrode assembly 22 according to one or more examples.

In some examples, with reference to FIG. 4, FIG. 6, and FIG. 7, the electrode assembly 22 includes a positive electrode plate 22c and a negative electrode plate 22d. Both the positive electrode plate 22c and the negative electrode plate 22d include a current collection matrix J. In the electrode assembly 22 having the first heat dissipation surface b1, the current collection matrix J of at least one of the positive electrode plate 22c and the negative electrode plate 22d includes a convex part J2 that protrudes from the first heat dissipation surface b1, and the heat conduction structure 23 located between the first heat dissipation surface b1 and the first case wall a1 is in heat conduction connection with the convex part J2.

As described above, the current collection matrix J refers to a sheet structure that can be configured to carry an active substance and conduct a current. The current collection matrix J of the positive electrode plate 22c is usually an aluminum foil, and the current collection matrix J of the negative electrode plate 22d is usually a copper foil.

As shown in FIG. 5, the convex part J2 is of a structure that protrudes relative to the first heat dissipation surface b1 in the current collection matrix J. The convex part is a part of the current collection matrix J and is usually integrally arranged, similar to the tab J1 formed by the current collection matrix J. Usually, when the current collection matrix J includes the convex part J2, the tab J1 provided by the current collection matrix J and the convex part J2 may be located at two reverse ends in the height direction Z of the electrode assembly 22. In this case, the height direction Z of the electrode assembly 22 corresponds to the width direction Y of the current collection matrix J.

One or both of the current collection matrix J of the positive electrode plate 22c and the current collection matrix J of the negative electrode plate 22d protrude on the first heat dissipation surface b1 to form a convex part J2. The convex part J2 (defined as a first convex part J2) formed by the current collection matrix J of the positive electrode plate 22c and the convex part J2 (defined as a second convex part J2) formed by the current collection matrix J of the negative electrode plate 22d should be insulated to avoid short circuit. The first convex part J2 and the second convex part J2 may be spaced apart by a certain distance, or an insulation member may be coated outside both the first convex part J2 and the second convex part J2. Usually, to reduce the probability of short circuit between the current collection matrix J of the positive electrode plate 22c and the current collection matrix J of the negative electrode plate 22d, only the current collection matrix J of the positive electrode plate 22c or only the current collection matrix J of the negative electrode plate 22d protrudes to form a convex part J2, and processing and forming operations are simpler.

Usually, the convex part J2 and the tab J1 on the current collection matrix J are separately arranged. In some cases, the convex part J2 and the tab J1 on the current collection matrix J may also be integrally arranged, that is, the tab J1 is directly used as the convex part J2, provided that an electrical transmission function of the tab J1 is not affected. It can be understood that the convex parts J2 of the current collection matrixes J of the same polarity may be collected into a whole which is then connected to the heat conduction structure 23.

The convex part J2 is formed by the current collection matrix J by means of protrusion, and the current collection matrix J usually has a good heat conduction effect. In this way, the convex part J2 has a good heat conduction effect, and the heat from the current collection matrix J can be directly and rapidly conducted out through the convex part J2, thereby being conducive to improving the heat exchange efficiency of the electrode assembly 22.

In some examples, with reference to FIG. 6, in the electrode assembly 22 having the first heat dissipation surface b1, the tab J1 and the first heat dissipation surface b1 are arranged facing away from each other in the height direction Z of the electrode assembly 22.

That is, the electrode assembly 22 includes only one first heat dissipation surface b1, the tab J1 is located at one end of the electrode assembly 22 that is arranged facing away from the first heat dissipation surface b1 in the height direction Z, the convex part J2 is located at one end of the electrode assembly 22 in the height direction Z, and the tab J1 is located at the other end of the electrode assembly 22 in the height direction Z. In this way, the convex part J2 is arranged apart from the tab J1, and the structure of a conventional case 21 can be used to a large extent, thereby reducing the improvement cost of the battery cell 20.

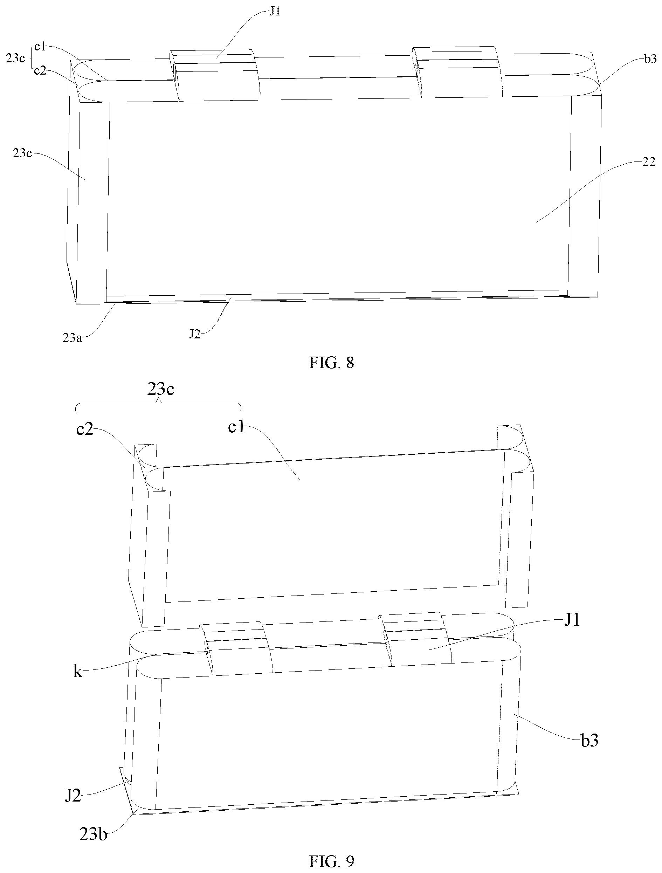

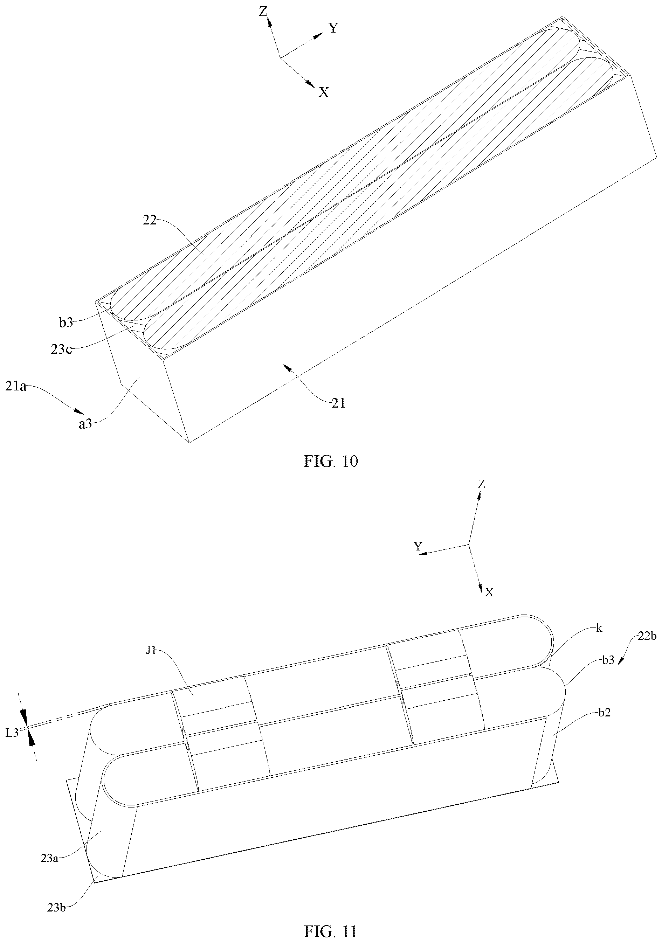

FIG. 8 is a schematic view of internal structures of a battery cell 20 in an example shown in FIG. 2. FIG. 9 is an exploded view of the battery cell 20 in the example shown in FIG. 8. FIG. 10 is a cross-sectional view of a battery cell 20 in an example shown in FIG. 2.

In some examples, referring to FIG. 8 and FIG. 9, and with reference to FIG. 4, the heat conduction structure 23 includes a heat conduction and insulation layer 23b. The heat conduction and insulation layer 23b is arranged on an inner side surface of the first case wall a1, and is connected between the first case wall a1 and the convex part J2.

The heat conduction and insulation layer 23b may be arranged on the inner side surface of the heat exchange case wall 21a by means of coating or spraying by using a heat conduction and insulation material. Materials of the heat conduction and insulation layer 23b may be conventionally selected.

In this case, the heat conduction and insulation layer 23b is formed as at least a part of the heat conduction structure 23, so that the cost is relatively low, and the implementation is easy. In addition, due to the arrangement of the convex part J2, the size of the electrode assembly 22 in the height direction Z is increased. Here, the heat conduction and insulation layer 23b is in heat conduction connection between the convex part J2 and the first case wall a1, thereby being conducive to reducing the height size of the battery cell 20, and improving the energy density of the battery cell 20.

It can be understood that when a plurality of electrode assemblies 22 have convex parts J2, each heat conduction and insulation layer 23b connected between each convex part J2 and the first case wall a1 may exist as a whole.

In some examples, referring to FIG. 4, the thickness of the heat conduction and insulation layer 23b is L1, and the protrusion height of the convex part J2 is L2, satisfying: L1<3 millimeters (mm), and/or, L2<6 millimeters (mm).

The thickness L1 of the heat conduction and insulation layer 23b refers to a maximum size of the heat conduction and insulation layer 23b in the height direction Z of the electrode assembly 22. The protrusion height L2 of the convex part J2 refers to a maximum size of the convex part J2 in the height direction Z.

Usually, smaller sizes of L1 and L2 indicate a smaller size of the battery cell 20 in the height direction Z, and a higher energy density of the battery cell 20. Certainly, excessively small sizes of L1 and L2 increase the processing difficulty, increase the processing cost, and do not significantly improve the heat exchange efficiency.

When L1 satisfies L1<3 mm, or L2 satisfies L2<6 mm, the energy density and processing cost of the battery cell 20 are relatively moderate, and certain heat exchange efficiency may be achieved.

In some examples, L1 satisfies 0.02 mm≤L1≤0.6 mm, and/or L2 satisfies 1 mm≤L2≤4 mm. Specifically, the value of L1 may be selected from 0.02 mm, 0.03 mm, 0.04 mm, 0.05 mm, 0.06 mm, or a value between any two adjacent values. Specifically, the value of L2 may be selected from 1 mm, 1.5 mm, 2 mm, 2.5 mm, 3 mm, 3.5 mm, 4 mm, or a value between any two adjacent values. In this case, the energy density of the battery cell 20 is high, and the battery cell has certain heat exchange efficiency.

In some examples, the heat conduction and insulation layer 23b includes at least one of a polyimide layer, an epoxy resin layer, a phenolic resin layer, a urea formaldehyde resin layer, a polyether ether ketone layer, a polybenzimidazole layer, an alumina layer, a boehmite layer, and a silicon carbide layer. In this case, the heat conduction and insulation layer has a good heat conduction effect and insulation effect.

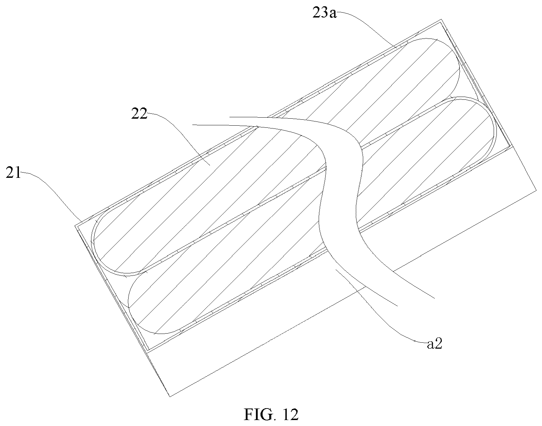

FIG. 11 is a schematic view of internal partial structures of a battery cell 20 in an example shown in FIG. 5. FIG. 12 is a cross-sectional view of the battery cell 20 shown in FIG. 11.

In some examples, referring to FIG. 11 and FIG. 12, and with reference to FIG. 5 and FIG. 6, at least one outer surface 22b of at least one electrode assembly 22 in the thickness direction X is a second heat dissipation surface b2, the heat exchange case wall 21a includes a second case wall a2, the second heat dissipation surface b2 and the second case wall a2 are arranged opposite to each other in the thickness direction X, and a heat conduction structure 23 is arranged between the second heat dissipation surface and the second case wall.

The second heat dissipation surface b2 is opposite to the second case wall a2 in the electrode assembly 22, the heat conduction structure 23 is arranged between the second heat dissipation surface and the second case wall a2, and the second heat dissipation surface is the outer surface 22b located in the thickness direction X of the electrode assembly 22.

The outer surface 22b located in the thickness direction X of the electrode assembly 22 is defined as a thickness-direction outer surface. The thickness direction X of the electrode assembly 22 usually corresponds to a stacking direction of the positive electrode plate 22c, the negative electrode plate 22d, and the spacer 22e. When the electrode assembly 22 is cylindrical, the thickness direction X of the electrode assembly 22 corresponds to a radial direction thereof, and the thickness-direction outer surface is a circumferential surface of the cylindrical structure. When the electrode assembly 22 is square, the thickness direction X of the electrode assembly 22 may correspond to the thickness direction X of the square structure, and there may be two thickness-direction outer surfaces.

When a plurality of electrode assemblies 22 are provided, thickness-direction outer surfaces of some/all electrode assemblies 22 may be used as the second heat dissipation surface b2, provided that all electrode assemblies 22 have at least one second heat dissipation surface b2.

The second case wall a2 is a case wall located in the thickness direction X of the electrode assembly 22 in the case 21, and there may be one or two second case walls.

Taking an example in which the wound electrode assembly 22 forms a square battery cell 20, the area of the thickness-direction outer surface of the wound electrode assembly 22 in the thickness direction X is larger than the area of the outer surface 22b in another direction, and the thickness-direction outer surface is usually referred to as a large surface of the electrode assembly 22. In other words, generally, the second heat dissipation surface b2 has a larger surface area than another outer surface 22b of the electrode assembly 22.

In this case, the second heat dissipation surface b2 having a relatively large surface area in the electrode assembly 22 is connected to the heat conduction structure 23, so that a contact area between the electrode assembly 22 and the second heat dissipation surface b2 is large, and the heat exchange efficiency is higher.

In some examples, referring to FIG. 11, a plurality of electrode assemblies 22 are provided, the plurality of electrode assemblies 22 are sequentially arranged along the thickness direction X of the plurality of electrode assemblies, and every two adjacent electrode assemblies 22 are spaced to form a through space k. The heat conduction structure 23 includes a first heat conduction and insulation pad 23a, and the first heat conduction and insulation pad 23a extends into each through space k and is in surface connection with the outer surface 22b forming each through space k.

Usually, a plurality of electrode assemblies 22 are configured in the battery cell 20, so that the battery cell 20 has a relatively large capacity and voltage. When a plurality of electrode assemblies 22 are configured, the thickness directions X of the electrode assemblies 22 are arranged in parallel, and the electrode assemblies 22 are sequentially arranged along the thickness directions X of the electrode assemblies. In the plurality of electrode assemblies 22, some electrode assemblies 22 may be arranged in parallel along the thickness directions X to form a row of structures, and the other electrode assemblies 22 may be arranged in parallel to form another row of structures. Each row of structures may be arranged in parallel in a direction (which is usually the width direction Y of the electrode assembly 22, where the width direction Y of the electrode assembly 22 corresponds to the length direction of the battery cell 20, and the thickness direction X of the electrode assembly 22 may correspond to the width direction Y of the battery cell 20) generally perpendicular to the thickness direction X.

The first heat conduction and insulation pad 23a refers to a roughly sheet-shaped structure made of a heat conduction and insulation material. In two electrode assemblies 22 that are arranged in parallel along the thickness direction X, a through space k is formed at an interval between two opposite thickness-direction outer surfaces, and the first heat conduction and insulation pad 23a extends into the through space k and is in contact with the two thickness-direction outer surfaces forming the through space k. That is, it can be understood that the first heat conduction and insulation pad 23a is sandwiched between the two opposite thickness-direction outer surfaces.

It should be noted that when there are a plurality of through spaces k, the first heat conduction and insulation pad 23a extends into each through space k. Specifically and optionally, the heat conduction structure 23 includes a connecting part and a plurality of first heat conduction and insulation pads 23a. Each first heat conduction and insulation pad 23a correspondingly extends into a through space k, and all first heat conduction and insulation pads 23a are connected together through the connecting part. The heat conduction structure 23 is connected to the heat exchange case wall 21a through the connecting part.

In this case, the same first heat conduction and insulation pad 23a may be in heat conduction connection with the thickness-direction outer surfaces of two electrode assemblies 22. The heat conduction structure 23 has higher heat conduction efficiency for all electrode assemblies 22 as a whole.

In some examples, with reference to FIG. 11 and FIG. 12, the first heat conduction and insulation pad 23a is continuously arranged in an extended manner, the through spaces k sequentially arranged along the thickness direction X of the electrode assembly 22 are sequentially located on an extension path of the first heat conduction and insulation pad 23a, and the first heat conduction and insulation pad 23a is arranged between the second heat dissipation surface b2 and the second case wall a2.

Referring to FIG. 11, the first heat conduction and insulation pad 23a is bent and extended approximately in an S shape, and in an extension process, the first heat conduction and insulation pad is attached to at least one thickness-direction outer surface of each electrode assembly 22. In the example shown in FIG. 11, there are three electrode assemblies 22. For ease of description, the three electrode assemblies 22 are respectively referred to as a first electrode assembly 22, a second electrode assembly 22, and a third electrode assembly 22 along the arrangement direction. Each electrode assembly 22 includes two thickness-direction outer surfaces which are respectively a left-side second outer surface 22b and a right-side outer surface 22b. In all thickness-direction outer surfaces, the thickness-direction outer surfaces located at two ends in the thickness direction X are used as the second heat dissipation surface b2.

An initial end of the first heat conduction and insulation pad 23a is arranged between the left-side outer surface 22b (the second heat dissipation surface b2) of the first electrode assembly 22 and one of the second case walls a2, extends along the left-side outer surface 22b of the first electrode assembly 22 to a through space k (defined as a first through space k) formed by the right-side outer surface 22b of the first electrode assembly 22 and the left-side outer surface 22b of the second electrode assembly 22, and then extends to a through space k (defined as a second through space k) formed by the right-side outer surface 22b of the second electrode assembly 22 and the left-side outer surface 22b of the third electrode assembly 22. Then, a tail end of the first heat conduction and insulation pad 23a extends to the right-side outer surface 22b (used as the second heat dissipation surface b2) attached to the third electrode assembly 22 and is in contact with the other second case wall a2.

In some examples, the first heat conduction and insulation pad 23a is flexible, so that it is convenient to wind the first heat conduction and insulation pad together with each electrode assembly 22, and the connection and attachment tightness is better. In some examples, the size of the first heat conduction and insulation pad 23a in the height direction Z is equivalent to the size of the electrode assembly 22 in the height direction Z. In this way, a contact area between the first heat conduction and insulation pad 23a and each second heat dissipation surface b2 is the largest, and the heat conduction efficiency of the first heat conduction and insulation pad 23a per unit area is relatively high.

In this case, the first heat conduction and insulation pad 23a may be in heat conduction contact with the outer surfaces 22b of the plurality of electrode assemblies 22 in the thickness direction X on the extension path, thereby improving the heat exchange efficiency between the second case wall a2 and the electrode assembly 22.

In some examples, referring to FIG. 11, the thickness of the first heat conduction and insulation pad 23a is L3, satisfying: L3<4 mm.

The thickness L3 of the first heat conduction and insulation pad 23a refers to a size in a direction perpendicular to an extension direction of the first heat conduction and insulation pad.

A smaller thickness L3 of the first heat conduction and insulation pad 23a indicates a smaller occupied space inside the battery cell 20, so as to be more conducive to improving the energy density of the battery cell 20. When L3 is excessively small, the capability of transferring heat by the first heat conduction and insulation pad 23a is lower.

When L3<4 mm, the battery cell 20 can achieve both the high energy density of the battery cell 20 and the high heat conduction efficiency of the first heat conduction and insulation pad 23a.

In some examples, 0.3 mm≤L3≤2 mm. Specifically, the value of L3 may be selected from 0.3 mm, 0.5 mm, 1 mm, 1.5 mm, 2 mm, 2.5 mm, 3 mm, or any value between adjacent values. In this case, the energy density and heat conduction efficiency of the battery cell are both high.

In some examples, with reference to FIG. 6 and FIG. 11, one of the outer surfaces 22b of each electrode assembly 22 in the width direction Y is a third heat dissipation surface b3, and the third heat dissipation surfaces b3 of adjacent electrode assemblies 22 are arranged facing away from each other in the width direction Y. The third heat dissipation surface b3 is in surface contact with the first heat conduction and insulation pad 23a.

An outer surface 22b of the electrode assembly 22 in the width direction Y is referred to as a width-direction outer surface. Generally, there are two width-direction outer surfaces. The width direction Y, thickness direction X, and height direction Z of the electrode assembly 22 are approximately perpendicular to each other. When the electrode assembly 22 is cylindrical, the width direction Y and thickness direction X thereof may be two perpendicular radial directions.

The third heat dissipation surface b3 is not arranged opposite to the heat exchange case wall 21a, but is in surface contact with the first heat conduction and insulation pad 23a. Specifically, referring to FIG. 8, when the first heat conduction and insulation pad 23a bends and extends into each through space k, the first heat conduction and insulation pad 23a may extend along one width-direction outer surface in the electrode assembly 22, and enter the through space k located on the downstream side of the width-direction outer surface in the extension path.

In this case, not only a contact area between the first heat conduction and insulation pad 23a and the electrode assembly 22 is increased, but also the first heat conduction and insulation pad 23a and the electrode assembly 22 are more tightly wound. The position stability of each electrode assembly 22 can be enhanced by the first heat conduction and insulation pad 23a.

Certainly, when the heat conduction structure 23 takes a structural form other than the first heat conduction and insulation pad 23a, the heat conduction structure 23 may also be in heat conduction connection with the third heat dissipation surface b3 at the same time.

In some examples, referring to FIG. 10, and with reference to FIG. 8 and FIG. 9, at least one outer surface 22b of at least one electrode assembly 22 in the width direction Y is a third heat dissipation surface b3, the case 21 includes a third case wall a3, the third heat dissipation surface b3 is arranged opposite to the third case wall a3, and a heat conduction structure 23 is arranged between the third heat dissipation surface and the third case wall.

The third heat dissipation surface b3 is an outer surface 22b located in the width direction Y in the electrode assembly 22. It can be understood that each electrode assembly 22 includes two third heat dissipation surfaces b3 arranged facing away from each other. For the wound electrode assembly 22, the third heat dissipation surface b3 is usually an arc surface.

The third case wall a3 is of a case wall structure of the case 21 located in the width direction Y of the electrode assembly 22. The third case wall a3 may be used as a part of the heat exchange case wall 21a, and can perform heat exchange with the external heat exchange structure 30. The third case wall a3 may also not be used as the heat exchange case wall 21a.

Specifically and optionally, a heat conduction structure 23 is arranged between each third heat dissipation surface b3 of each electrode assembly 22 and the third case wall a3. Optionally, a heat conduction structure 23 is arranged between all third heat dissipation surfaces b3 of all electrode assemblies 22 and the third case wall a3. In this case, the heat conduction structure 23 may be integrally connected between the third case wall a3 and all third heat dissipation surfaces b3.

In an example, because of a contact area between the third heat dissipation surface b3 and the heat conduction structure 23, the contour of the heat conduction structure 23 is matched with the contour of the third heat dissipation surface b3. For example, in the examples shown in FIG. 8, FIG. 9, and FIG. 10, the surface of the heat conduction structure 23 in contact with the third heat dissipation surface b3 is an arc surface matched with the contour of the third heat dissipation surface b3.

In this case, by arranging the heat conduction structure 23 between the third case wall a3 and the third heat dissipation surface b3, a transfer path through which the heat of the electrode assembly 22 is transferred to the case 21 can be increased, so that the degree of heat exchange between the case 21 and the outside can be improved, thereby facilitating the heat dissipation of the battery cell 20.

In some examples, referring to FIG. 9, and with reference to FIG. 8 and FIG. 10, a plurality of electrode assemblies 22 are provided, the plurality of electrode assemblies 22 are arranged along the thickness direction X of the plurality of electrode assemblies, and every two adjacent electrode assemblies 22 are spaced to form a through space k. The heat conduction structure 23 includes a second heat conduction and insulation pad 23c, a part of the second heat conduction and insulation pad 23c extends into each through space k and is in surface connection with an outer surface 22b forming each through space k, and a remaining part of the second heat conduction and insulation pad 23c is arranged between all third heat dissipation surfaces b3 and the third case wall a3.

For introduction of the through space k, refer to the foregoing description. The second heat conduction and insulation pad 23c is of a structure made of a heat conduction and insulation material, and includes a first heat conduction and insulation part c1 and a second heat conduction and insulation part c2. The first heat conduction and insulation part c1 of the second heat conduction and insulation pad 23c extends into each through space k, and is in surface connection with the electrode assembly 22 forming the through space k. The second heat conduction and insulation part c2 is arranged between the third heat dissipation surface b3 of each electrode assembly 22 and the third case wall a3.

The examples shown in FIG. 8 to FIG. 10 are used as examples for introduction. When two electrode assemblies 22 are included, and the first heat conduction and insulation part c1 extends into the through space k between the two electrode assemblies 22, large-surface connection between the electrode assemblies 22 can be implemented through the first heat conduction and insulation part c1 of the second heat conduction and insulation pad 23c, and the conduction efficiency between the electrode assemblies 22 is relatively high. In addition, two outer surfaces 22b of each electrode assembly in the width direction Y are both third heat dissipation surfaces b3, and a second heat conduction and insulation part c2 of the second heat conduction and insulation pad 23c is arranged between the third heat dissipation surface b3 and the third case wall a3. The first heat conduction and insulation part c and the second heat conduction and insulation part c2 of the second heat conduction and insulation pad 23c are usually, but not limited to, integrally arranged. In this case, the second heat conduction and insulation pad 23c approximately has an H-shaped structure.

In this case, the second heat conduction and insulation pad 23c may extend into the through space k between the electrode assemblies 22 and is in heat conduction connection with an adjacent electrode assembly 22, so as to improve the heat conduction efficiency between the electrode assembly 22 and the case 21, thereby being conducive to improving the heat dissipation efficiency when the internal heat of the battery cell 20 is conducted to the outside.

In some examples, referring to FIG. 8, the second heat conduction and insulation pad 23c is connected to the heat conduction and insulation layer 23b. Specifically, the bottom of the second heat conduction and insulation pad 23c is supported on the heat conduction and insulation layer 23b. In this way, the heat inside the electrode assembly 22 may be conducted to the external heat exchange structure 30 through the second heat conduction and insulation pad 23c, the heat conduction and insulation layer 23b, and the first case wall a1, so that the heat exchange efficiency between the electrode assembly 22 and the heat exchange structure 30 is higher.

It can be easily understood that in this example of the present application, when the case 21 includes a first case wall a1, a second case wall a2, and a third case wall a3, the first case wall, the second case wall, and the third case wall intersect with each other and are not coplanar.

In an example of the present application, the battery cell 20 includes a case 21, at least one electrode assembly 22, and a heat conduction structure 23. The case 21 has a heat exchange case wall 21a, and the heat exchange case wall 21a is configured to be in contact with a heat exchange structure 30 located outside the case 21. A convex part J2 protrudes from a bottom surface of each electrode assembly 22 in the height direction Z, and the convex part J2 is in contact with the first case wall a1 through the heat conduction and insulation layer 23b. The first case wall a1 is located on the case 21 in the height direction Z of the electrode assembly 22, and the second case wall a2 is located on the case 21 in the thickness direction X of the electrode assembly 22. The heat exchange case wall 21a includes a first case wall a1, the heat conduction structure 23 includes a heat conduction and insulation layer 23b, and the heat conduction and insulation layer 23b is arranged on an inner side surface of the first case wall a1.

The heat exchange case wall 21a further includes a second case wall a2, the heat conduction structure 23 further includes a first heat conduction and insulation pad 23a, and the first heat conduction and insulation pad 23a is wound in an S shape and extends between adjacent electrode assemblies 22, is in contact with two outer surfaces of each electrode assembly 22 in two thickness directions, and is in contact with the second case wall a2; or

the case 21 further includes a third case wall a3, the heat conduction structure 23 further includes a second heat conduction and insulation pad 23c, and the second heat conduction and insulation pad 23c extends between adjacent electrode assemblies 22, is in contact with outer surfaces of each electrode assembly 22 in two width directions, and is in contact with the third case wall a3.

In addition, an example of the present application further provides a battery 100. Referring to FIG. 2 to FIG. 5, the battery includes a heat exchange structure 30 and the foregoing battery cell 20. The heat exchange structure 30 is located outside the case 21 and is in contact with the heat exchange case wall 21a. For introduction of the heat exchange structure 30 and the battery cell 20, refer to the foregoing descriptions, and details are not described here again. The battery 100 has all beneficial effects in the foregoing examples.

In some examples, referring to FIG. 2, FIG. 4, and FIG. 5, the battery 100 includes a box body 10, a plurality of battery cells 20 are provided, and all battery cells 20 are supported in parallel on a bottom inner wall 10a of the box body 10. A heat exchange structure 30 is arranged between adjacent battery cells 20, and/or a heat exchange structure 30 is arranged between the bottom inner wall 10a and the battery cell 20.

The box body 10 is a member of an inner space of the battery 100, and may be a plastic piece, a metal piece, or another composite material piece. For introduction of the box body 10, refer to the foregoing descriptions.

The plurality of battery cells 20 may be arranged in a matrix and arranged on the bottom inner wall 10a of the box body 10. Usually, the bottom inner wall 10a of the box body 10 is located in the height direction Z of the electrode assembly 22 in the battery cell 20. When the heat exchange structure 30 is arranged between adjacent battery cells 20, specifically, when the heat exchange structure 30 is arranged between the second case walls a2 of the adjacent battery cells 20, in this case, the same heat exchange structure 30 may be used to perform heat exchange on the second case walls a2 of different battery cells 20. A heat exchange path between the electrode assembly 22 and the heat exchange structure 30 is shortened by using the second case wall a2, the heat conduction structure 23 (specifically, the first heat conduction and insulation pad 23a), and the second heat dissipation surface b2.

When the heat exchange structure 30 is arranged between the bottom inner wall 10a and the bottom of all or some battery cells 20, in this case, a heat exchange path between the electrode assembly 22 and the heat exchange structure 30 may be shortened by using the first case wall a1, the heat conduction structure 23 (specifically, the heat conduction and insulation layer 23b), and the first heat dissipation surface b1 of the battery cell 20.

In this case, corresponding to different arrangement solutions of heat exchange structures 30, heat dissipation solutions of battery cells 20 matched with the arrangement solutions may be configured. A heat exchange path between the heat exchange structure 30 and the electrode assembly 22 is shortened through the heat exchange case wall 21a and the heat conduction structure 23, thereby improving the heat exchange efficiency of the heat exchange structure 30 to the electrode assembly 22.

In addition, an example of the present application further provides a power consuming apparatus, including the foregoing battery 100, and the battery 100 is configured to provide electric energy. The power consuming apparatus has all the foregoing beneficial effects, and details are not described here again.

The technical features in the foregoing examples may be randomly combined. For concise description, not all possible combinations of the technical features in the foregoing examples are described. However, provided that combinations of the technical features do not conflict with each other, the combinations of the technical features are considered as falling within the scope described in this specification.

The foregoing examples merely express several embodiments of the present application. The descriptions thereof are relatively specific and detailed, but should not be understood as limitations to the scope of the present application. It should be noted that for those of ordinary skill in the art, several transformations and improvements can be made without departing from the idea of the present application. These transformations and improvements belong to the protection scope of the present application. Therefore, the protection scope of the patent of the present application shall be subject to the appended claims.

## Claims

1. A battery cell (20), comprising:
a case (21) having a heat exchange case wall (21a), and the heat exchange case wall (21a) being configured to conduct heat inside the battery cell (20) to a heat exchange structure (30) located outside the case (21);
at least one electrode assembly (22); and
a heat conduction structure (23) accommodated in the case (21), the heat conduction structure (23) being arranged between the electrode assembly (22) and the heat exchange case wall (21a) in the manner of heat conduction.

2. The battery cell (20) according to claim 1, wherein:
an outer surface (22b) of at least one electrode assembly (22) is arranged opposite to the heat exchange case wall (21a); and
the heat conduction structure (23) is arranged between at least one group of outer surfaces (22b) and the heat exchange case wall (21a) that are arranged opposite to each other.

3. The battery cell (20) according to claim 1 or 2, wherein:
at least one outer surface (22b) of at least one electrode assembly (22) in a height direction (Z) is a first heat dissipation surface (b1), and a tab (J1) of the electrode assembly (22) is located on at least one end in the height direction (Z); and
the heat exchange case wall (21a) comprises a first case wall (a1), the first heat dissipation surface (b1) and the first case wall (a1) are arranged opposite to each other in the height direction (Z), and the heat conduction structure (23) is arranged between the first heat dissipation surface and the first case wall.

4. The battery cell (20) according to claim 3, wherein:
the electrode assembly (22) comprises a positive electrode plate (22c) and a negative electrode plate (22d), and both the positive electrode plate (22c) and the negative electrode plate (22d) comprise a current collection matrix (J);
in the electrode assembly (22) having the first heat dissipation surface (b1), the current collection matrix (J) in at least one of the positive electrode plate (22c) and the negative electrode plate (22d) comprises a convex part (J2) that protrudes from the first heat dissipation surface (b1); and
the heat conduction structure (23) located between the first heat dissipation surface (b1) and the first case wall (a1) is in heat conduction connection with the convex part (J2).

5. The battery cell (20) according to claim 4, wherein in the electrode assembly (22) having the first heat dissipation surface (b1), the tab (J1) and the first heat dissipation surface (b1) are arranged facing away from each other in the height direction (Z) of the electrode assembly (22).

6. The battery cell (20) according to claim 4, wherein the heat conduction structure (23) comprises a heat conduction and insulation layer (23b), and the heat conduction and insulation layer (23b) is arranged on an inner side surface of the first case wall (a1) and is connected between the first case wall (a1) and the convex part (J2).

7. The battery cell (20) according to claim 6, wherein thickness of the heat conduction and insulation layer (23b) is L1, and protrusion height of the convex part (J2) is L2, satisfying: L1<3 mm, and/or, L2<6 mm.

8. The battery cell (20) according to claim 7, wherein the L1 satisfies: 0.02 mm≤L1≤0.6 mm; and/or, the L2 satisfies: 1 mm≤L2≤4 mm.

9. The battery cell (20) according to claim 6, 7, or 8, wherein the heat conduction and insulation layer (23b) comprises at least one of a polyimide layer, an epoxy resin layer, a phenolic resin layer, a urea formaldehyde resin layer, a polyether ether ketone layer, a polybenzimidazole layer, an alumina layer, a boehmite layer, and a silicon carbide layer.

10. The battery cell (20) according to any one of claims 1 to 9, wherein:
at least one outer surface (22b) of at least one electrode assembly (22) in a thickness direction (X) is a second heat dissipation surface (b2); and
the heat exchange case wall (21a) comprises a second case wall (a1), the second heat dissipation surface (b2) and the second case wall (a1) are arranged opposite to each other in the thickness direction (X), and the heat conduction structure (23) is arranged between the second heat dissipation surface and the second case wall.

11. The battery cell (20) according to claim 10, wherein:
a plurality of electrode assemblies (22) are provided; and the plurality of electrode assemblies (22) are arranged along the thickness direction (X) of the plurality of electrode assemblies, and every two adjacent electrode assemblies (22) are spaced to form a through space (k); and
the heat conduction structure (23) comprises a first heat conduction and insulation pad (23a), and the first heat conduction and insulation pad (23a) extends into each through space (k) and is in surface connection with the outer surface (22b) forming each through space (k).

12. The battery cell (20) according to claim 11, wherein:
the first heat conduction and insulation pad (23a) is continuously arranged in an extended manner, and the through spaces (k) sequentially arranged along the thickness direction (X) of the electrode assembly (22) are sequentially located on an extension path of the first heat conduction and insulation pad (23a); and
the first heat conduction and insulation pad (23a) is arranged between the second heat dissipation surface (b2) and the second case wall (a1).

13. The battery cell (20) according to claim 11 or 12, wherein thickness of the first heat conduction and insulation pad (23a) is L3, satisfying: L3<4 mm.

14. The battery cell (20) according to claim 13, wherein the L3 satisfies: 0.3 mm≤L3≤2 mm.

15. The battery cell (20) according to any one of claims 11 to 14, wherein:
one of the outer surfaces (22b) of each electrode assembly (22) in a width direction (Y) is a third heat dissipation surface (b3), and the third heat dissipation surfaces (b3) of adjacent electrode assemblies (22) are arranged facing away from each other in the width direction (Y); and
the third heat dissipation surface (b3) is in surface contact with the first heat conduction and insulation pad (23a).

16. The battery cell (20) according to any one of claims 1 to 15, wherein:
at least one outer surface (22b) of at least one electrode assembly (22) in the width direction (Y) is a third heat dissipation surface (b3); and
the case (21) comprises a third case wall (a3), the third heat dissipation surface (b3) is arranged opposite to the third case wall (a3), and the heat conduction structure (23) is arranged between the third heat dissipation surface and the third case wall.

17. The battery cell (20) according to claim 16, wherein:
a plurality of electrode assemblies (22) are provided;
the plurality of electrode assemblies (22) are arranged along thickness direction (X) of the plurality of electrode assemblies, and every two adjacent electrode assemblies (22) are spaced to form a through space (k);
the heat conduction structure (23) comprises a second heat conduction and insulation pad (23c), and a part of the second heat conduction and insulation pad (23c) extends into each through space (k) and is in surface connection with the outer surface (22b) forming each through space (k); and
a remaining part of the second heat conduction and insulation pad (23c) is arranged between the third heat dissipation surface (b3) and the third case wall (a3).

18. A battery (100), comprising:
a heat exchange structure (30); and
the battery cell (20) according to any one of claims 1 to 17, wherein the heat exchange structure (30) is located outside the case (21) and is in contact with the heat exchange case wall (21a).

19. The battery (100) according to claim 18, wherein:
the battery (100) further comprises a box body (10), a plurality of battery cells (20) are provided, and all battery cells (20) are supported in parallel on a bottom inner wall (10a) of the box body (10); and
the heat exchange structure (30) is arranged between adjacent battery cells (20), and/or the heat exchange structure (30) is arranged between the bottom inner wall (10a) and the battery cell (20).

20. A power consuming apparatus, comprising the battery (100) according to claim 18 or 19, wherein the battery (100) is configured to provide electric energy.
